# EUROPÄISCHE PATENTSCHRIFT

(11) **EP 2 870 084 B1**
(45) Veröffentlichungstag und Bekanntmachung des Hinweises auf die Patenterteilung: **06.04.2016**
(21) Anmeldenummer: 13732556.9
(22) Anmeldetag: 01.07.2013
(51) Int. Cl.: B65G 17/12

(54) **GURTBECHERWERK MIT DURCH DEN BECHERSTRANG GESCHÜTZTEN GURT**
BUCKET ELEVATOR WITH BELT PROTECTED BY THE BUCKET SECTION
ÉLÉVATEUR À GODETS PRÉSENTANT UNE COURROIE PROTÉGÉE PAR LIGNE DE GODETS

(30) Priorität: 04.07.2012 DE 102012105988
(43) Veröffentlichungstag der Anmeldung: 13.05.2015
(73) Patentinhaber: Aumund Fördertechnik GmbH, 47495 Rheinberg (DE)
(72) Erfinder: FURTHMANN, Reiner, 47495 Rheinberg (DE); KIRSCHNIOK, Christian, 47445 Moers (DE)
(74) Vertreter: Müller, Karl-Ernst
(86) Internationale Anmeldenummer: PCT/EP2013/063823
(87) Internationale Veröffentlichungsnummer: WO 2014/005991

(56) Entgegenhaltungen:
- EP-A1- 0 186 772
- FR-A- 544 224
- US-A- 5 143 203
- US-B1- 6 220 425

## Beschreibung

Die Erfindung betrifft ein Gurtbecherwerk mit einem angetriebenen, über an einem Becherwerkskopf und an einem Becherwerksfuß angeordnete Trommeln umlaufenden, endlosen Gurt und mit wenigstens einer sich in der Verlaufsrichtung des Gurtes erstreckenden Reihe von jeweils einzeln an dem Gurt befestigten, einen Boden, eine Rückwand, Seitenwände sowie eine vordere Becherwand aufweisenden Bechern zur Förderung eines Schüttgutes, wobei die jeweils in wenigstens einer sich in Verlaufsrichtung des Gurtes erstreckenden Reihe in dichter Abfolge zueinander angeordneten Becher an ihrem Boden eine geringere Breite als am oberen Ende ihrer dadurch seitlich auswärts ausgestellten Seitenwände aufweisen, und dass die Becheranordnung auf dem Gurt derart ausgelegt ist, dass der Gurt einschließlich seiner äußeren Seitenränder vollständig von den auf ihm angeordneten Bechern durch Überlappung benachbarter Becher abgedeckt ist.

Ein Gurtbecherwerk ist aus der DE 201 13 181 U1 bekannt. Bei diesem Gurtbecherwerk wie auch bei anderen, aus dem Stand der Technik bekannten Gurtbecherwerken (siehe beispielsweise DE 200 15 552 U1) sind die einzelnen Becher an ihrer Rückwand mit einem Abstand zueinander auf dem umlaufenden Gurt befestigt, wobei der Gurt eine größere Breite als die Becher aufweist, um beispielsweise wenigstens einen äußeren Rand des Gurtes für eine zugeordnete Schieflaufüberwachungseinrichtung zugänglich zu halten.

Mit einem derartigen bekannten Gurtbecherwerk ist noch der Nachteil verbunden, dass insbesondere durch den Abwurf des in den Bechern geförderten Schüttgutes im Bereich des Becherwerkskopfes Schüttgutpartikel in den zwischen dem Gurt und der Rückwand der Becher bestehenden und sich beim Umlauf über die Trommeln jeweils weiter öffnenden Zwischenraum fallen können und hier insbesondere beim Umlauf des Gurtes mit den daran befestigten Bechern über den unteren Becherwerksfuß geklemmt bzw. durch die auftretenden Kräfte zerkleinert werden, womit eine Beschädigung des Gurtes und/oder der Becherbefestigungen daran einhergehen kann. Außerdem wirken hierdurch hohe Kräfte auf die Befestigung der Becher an dem Gurt ein. Diese Gefahr nimmt insbesondere mit zunehmender Stückigkeit des zu fördernden Schüttgutes zu.

Ein Gurtbecherwerk mit einer Reihe von in einer dichten Abfolge auf dem Gurt angeordneten Bechern ist in der US 4,333,561 A beschrieben. Es sind jeweils Gruppen von Bechern gebildet mit jeweils einem untersten, einen geschlossenen Boden aufweisenden Becher und säulenartig darüber angeordneten, jeweils einen offenen Boden aufweisenden weiteren Bechern. Die Böden der einzelnen Becher verlaufen jeweils oberhalb des oberen Randes des jeweils unteren Bechers, sodass sich zwischen den einzelnen Becherbefestigungen ein Abstand ergibt. Es kommt hinzu, dass die Becher schmaler sind als die Breite des Gurtes, so dass die äußeren Ränder des Gurtes freiliegen.

Ein Becherwerk mit an seitlichen Zugmitteln eng aneinander gereiht befestigten Bechern ist weiterhin aus der DE 1 199 184 A bekannt. Die einzelnen Becher weisen halbzylinderförmig gebogene Böden sowie jeweils eine federnd auf dem halbzylindrischen Boden eines vorangehenden Bechers gleitende Stirnwand auf derart, dass die gegenseitige Überlappung der Becher auch beim Umlauf über eine Trommel aufrechterhalten bleibt.

Ein Becherwerk mit den eingangs genannten Merkmalen ist zudem aus FR 544 224 A bekannt. Bei der in FR 544 224 A beschriebenen Ausgestaltung des Becherwerkes wird der Gurt allerdings nicht in den Umlaufbereichen vollständig von den Bechern abgedeckt.

Der Erfindung liegt die Aufgabe zugrunde, ein Gurtbecherwerk mit den eingangs genannten Merkmalen zu verbessern und insbesondere für die Förderung von Grobkorn einzurichten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Becher an dem unteren Ende ihrer dem Gurt zugewandten Rückwand einen über den Boden des Bechers in Richtung des in Förderrichtung nachfolgenden Bechers vorspringenden Überstand aufweisen, der bei senkrecht übereinander stehenden Bechern zwischen die dem oberen Rand der Rückwand überragenden Seitenwände des in Förderrichtung nachfolgenden Bechers greift und sich dichtend bis an den oberen Rand der Rückwand des nachfolgenden Bechers heran erstreckt, wobei die Becher in einer auch beim Umlauf über jede der Trommeln aufrechterhaltenen gegenseitigen Überlappung an dem Gurt befestigt sind.

Mit der Erfindung ist der Vorteil verbunden, dass aufgrund der dichten Abfolge der einzelnen Becher in den Becherreihen das Eindringen von Schüttgutpartikeln in die zwischen Becher und Gurt bestehenden Zwischenräume verhindert ist, so dass sich das erfindungsgemäße Gurtbecherwerk insbesondere für die Förderung von grobkörnigem Schüttgut eignet. Da die gegebenenfalls in mehreren Reihen nebeneinander angeordneten Becher auf dem Gurt so angeordnet sind, dass der Gurt vollständig von den auf ihm angeordneten Bechern abgedeckt ist, sind die Gurte durch die Becheranordnung an ihrer Oberfläche geschützt und können daher gegebenenfalls mit einer geringeren Sicherheitsreserve und somit bezogen auf die Förderkapazität eines Becherstranges kostensparend ausgelegt werden. Es kommt hinzu, dass auch die äußeren Ränder des Gurtes von den Bechern überdeckt sind, so dass die äußeren Ränder ebenfalls geschützt sind.

In einer ersten, einfachsten Ausführungsform der Erfindung ist vorgesehen, dass bei Vorhandensein nur einer Reihe von auf dem Gurt angeordneten Bechern die Becher eine größere Breite als die Breite des Gurtes aufweisen und jeweils seitlich über die Seitenränder des Gurtes überstehen.

Soweit bei Gurtbecherwerken mit einer gewünschten größeren Förderkapazität vorgesehen sein kann, dass mindestens zwei oder aber auch mehrere Reihen von Bechern in der Verlaufrichtung des Gurtes nebeneinander angeordnet sind, ist nach einem alternativen Ausführungsbeispiel der Erfindung für die vollständige Abdeckung des Gurtes durch die auf ihm angeordneten Becher dadurch Sorge getragen, dass bei Aufrechterhaltung der dichten Anordnung und der gegenseitigen Überlappung der in einer Reihe angeordneten Becher die einzelnen Becher von benachbarten Becherreihen mit einem in der Verlaufsrichtung des Gurtes ausgerichteten Versatz zueinander angeordnet sind derart, dass die oberen Enden der seitlich ausgestellten Seitenwände der Becher jeweils einander überlappen.

Soweit weiterhin vorgesehen ist, dass die Seitenwände benachbarter Becher in Förderrichtung einander überlappen, wird durch diese Überlappung das Entstehen von offenen Lücken bzw. Zwischenräumen auch während des Umlaufes des Becherstranges über die Trommeln verhindert, so dass kein Schüttgut zwischen den Becherstrang und den diesen tragenden Gurt gelangen kann.

Hinsichtlich einer zweckmäßigen Ausgestaltung der Becher kann vorgesehen sein, dass der obere Rand der parallel zum Gurt verlaufenden Rückwand des Bechers einen von der Rückwand in Richtung der Becheröffnung nach innen abgebogenen Bereich aufweist.

Soweit nach einem Ausführungsbeispiel der Erfindung vorgesehen ist, dass zur Befestigung der einzelnen Becher an dem Gurt zwischen der Rückwand des Bechers und dem Gurt eine Halteplatte angeordnet ist, ist damit der erforderliche Spielraum für die gegenseitige Überlappung der auf dem Gurt befestigten einzelnen Becher gegeben.

Im Rahmen einer solchen Ausgestaltung kann zur Einrichtung einer Überlappung der Becher vorgesehen sein, dass der über den Boden des Bechers vorspringende Überstand des in Förderrichtung vorangehenden Bechers bei senkrecht übereinander stehenden Bechern zwischen den abgebogenen Bereich der Rückwand und den den Becher tragenden Gurt greift, so dass eine Überlappung des Überstandes des vorangehenden Bechers mit der Rückwand des nachfolgenden Bechers gegeben ist.

Zu einer Verbesserung der Überlappung der einzelnen Becher ist nach einem Ausführungsbeispiel der Erfindung vorgesehen, dass der nach innen abgebogene Bereich der Rückwand sich in einen wiederum nach außen abknickenden hakenförmigen Fortsatz mit einer dadurch im rückwärtigen Bereich ausgebildeten Hakenöffnung fortsetzt und der über den Boden des Bechers vorspringende Überstand des in Förderrichtung vorangehenden Bechers hakenförmig mit einem in die Hakenöffnung des nachfolgenden Bechers einspringenden Haken ausgebildet ist. Hiermit ist der Vorteil verbunden, dass der Eingriff der Haken des vorangehenden Bechers mit den Hakenöffnungen des nachfolgenden Bechers auch beim Umlauf des die Becher tragenden Gurtes über eine Umlenktrommel aufrechterhalten bleibt.

Die gewünschte Überlappung wird weiterhin dadurch verbessert, dass nach einem Ausführungsbeispiel der Erfindung die Seitenwände des Bechers an ihrem oberen Ende eine jeweils dreieckförmige Kontur aufweisen, deren Spitze oberhalb des Endes des abgebogenen Bereichs der Rückwand gelegen ist.

Zur Verstärkung der Becher kann vorgesehen sein, dass der obere Rand der Rückwand des Bechers mit einem innenseitig daran angesetzten Verstärkungsprofil versehen ist und/oder dass im Inneren des Bechers im Stoßbereich von Boden und Rückwand ein Verstärkungswinkel angebracht ist.

In der Zeichnung sind Ausführungsbeispiele der Erfindung wiedergegeben, welche nachstehend beschrieben sind. Es zeigen:
- Fig. 1: einen Gurt mit einer Reihe von darauf angeordneten Bechern in einer schematischen Vorderansicht,
- Fig. 2: einen einzelnen, an dem Gurt befestigten Becher in einer schematisierten Seitenansicht,
- Fig. 3: zwei einander in Förderrichtung nachfolgende Becher in einer rückwärtigen Perspektivansicht,
- Fig. 4: die beiden an einem Gurt befestigten Becher gemäß Figur 3 in einer Seitenansicht entsprechend Figur 2,
- Fig. 5: den Gegenstand der Figur 4 in einer Vorderansicht,
- Fig. 6: ein anderes Ausführungsbeispiel eines einzelnen Bechers in einer Darstellung entsprechend Figur 2,
- Fig. 7: zwei einander in Förderrichtung nachfolgende, entsprechend Figur 6 ausgebildete Becher in einer rückwärtigen Perspektivansicht,
- Fig. 8: die beiden an einem Gurt befestigten Becher gemäß Figur 7 in einer Seitenansicht entsprechend Figur 6,
- Fig. 9: den Gegenstand der Figur 8 in einer Vorderansicht,
- Fig. 10: eine Abfolge von an einem Gurt befestigten Becher beim Umlauf des Gurtes über eine am Becherwerkskopf angeordnete Trommel in einer schematisierten Seitenansicht,
- Fig. 11: einen Gurt mit drei nebeneinander auf dem Gurt angeordneten Reihen von Bechern in einer schematischen Vorderansicht.

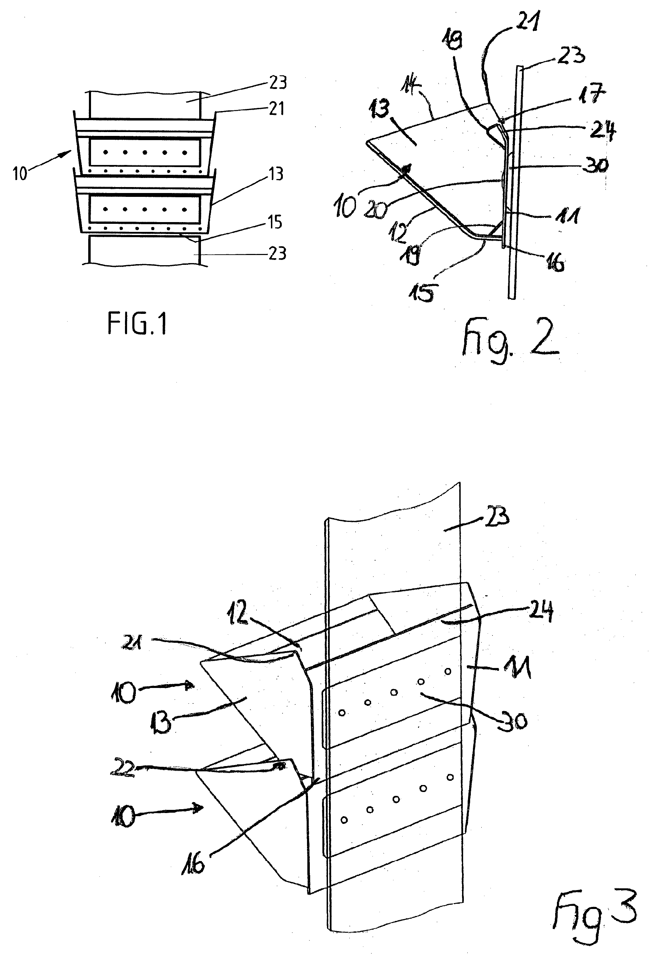

Bei dem in Figur 1 dargestellten Ausführungsbeispiel ist auf einem Gurt 23 eine Reihe von in einer dichten Abfolge angeordneten und jeweils einander überlappenden Bechern 10 angeordnet. Wie zunächst Figur 2 zu entnehmen ist, besteht jeder Becher 10 aus einer der Befestigung der Becher 10 an einem Gurt dienenden Rückwand 11, einer dazu gegenüberliegenden Vorderwand 12, wobei Rückwand 11 und Vorderwand 12 durch Seitenwände 13 miteinander verbunden sind, so dass sich eine Becheröffnung 14 zur Aufnahme des zu fördernden Schüttgutes ergibt. Der Becher ist durch eine Boden 15 abgeschlossen. Der Becher 10 ist an einem Gurt 23 eines Becherwerks befestigt, wobei zur Befestigung zwischen der Rückwand 11 des Bechers 10 und dem Gurt 23 eine von den zugeordneten Befestigungsmitteln durchgriffene Halteplatte 30 angeordnet ist, die den erforderlichen Freiraum für die noch zu erläuternde Überlappung der einzelnen Becher 10 miteinander gibt.

Zur Einrichtung der von der Erfindung vorgesehenen Überlappung von in Förderrichtung aufeinander folgenden Bechern 10 weist jeder Becher an dem unteren Ende der Rückwand 11 einen über den Boden 15 des Bechers vorspringenden Überstand 16 auf. Bei dem dargestellten Ausführungsbeispiel ist der obere Rand 17 des Bechers 10 in Richtung der Becheröffnung 14 von der Rückwand 11 nach innen abgebogen und weist einen entsprechenden abgebogenen Bereich 24 auf. Am Ende des abgebogenen Bereichs 24 ist zur Verstärkung des oberen Randes 17 des Bechers ein Verstärkungsprofil 18 angebracht. Weiterhin ist im Inneren der Becheröffnung 14 im Stoßbereich von Boden 15 und Rückwand 11 ein Verstärkungswinkel 19 angebracht. Ferner sind in der Rückwand 11 Einziehungen 20 zur Aufnahme von Befestigungsmitteln, vorzugsweise Tellerschrauben, für die Befestigung des Bechers an einem Gurt ausgebildet.

Wie weiterhin aus Figur 2 ersichtlich, weisen die den oberen Rand 17 jeweils überragenden Seitenwände 13 an ihrem oberen Ende jeweils eine dreieckförmige Kontur mit einer Spitze 21 auf, die in etwa oberhalb des Endes des abgebogenen Bereichs 24 der Rückwand 11 gelegen ist.

Der technische Hintergrund insbesondere der Ausgestaltung des oberen Endes der Seitenwände 13 wie auch der Rückwände 11 mit jeweiligem Überstand 16 der Becher 10 ergibt sich aus Figur 3, aus der erkennbar ist, dass in einer senkrecht übereinander liegenden Stellung der einzelnen Becher 10 die Seitenwände 13 benachbarter Becher 10 sich aufgrund ihrer Dreieckskontur sowie der den oberen Rand 17 der Rückwand 10 überragenden Erstreckung einander mit einem Überlappungsbereich 22 überlappen. Dabei greifen die den jeweiligen Boden 15 eines Bechers 10 überragenden Überstände 16 zwischen die hervorstehenden Seitenwände 13 des in Förderrichtung nachfolgenden Bechers 10 und erstrecken sich bis hin zu einer Überlappung mit dem abgebogenen Bereich 24 der Rückwand 11 des nachfolgenden Bechers 10, wobei jeder Überstand 16 durch die Halteplatte 30 im Abstand zum Gurt 23 gehalten ist.

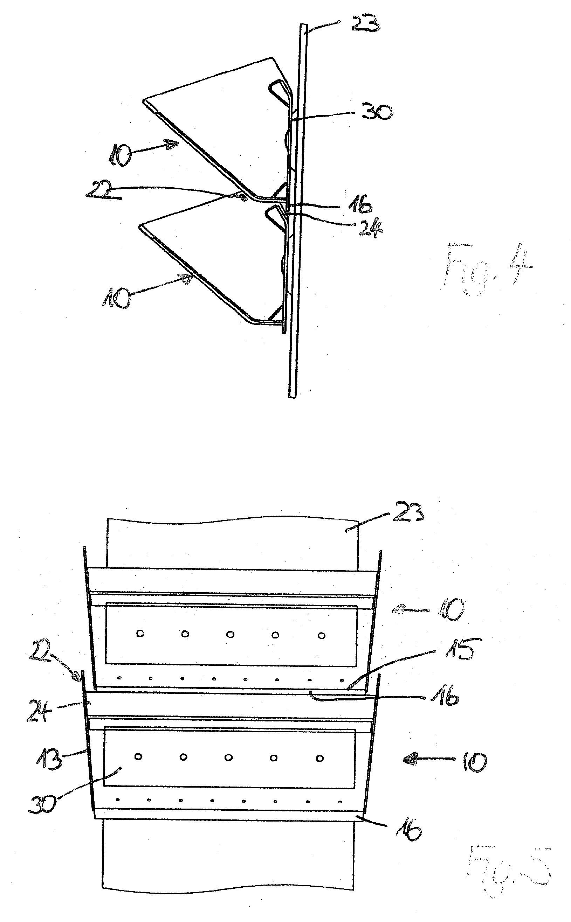

Aus den Figuren 4 und 5 ist die Zuordnung eines von mehreren Bechern 10 gebildeten Becherstranges zu einem die Becher 10 tragenden Gurt 23 ersichtlich, woraus einerseits deutlich wird, dass die Breite der Becher 10 größer ausgelegt ist als die Breite des Gurtes 23 und andererseits dass die an dem Boden 15 eines jeden Bechers 10 ausgebildeten Überstände 16 in dem durch die Anordnung der Halteplatte 30 bedingten Zwischenraum jeweils zwischen den abgebogenen Bereich 24 eines Bechers 10 und den entlang der Rückwand 11 verlaufenden Gurt 23 greifen, so dass die diesbezügliche Überlappung der einzelnen, an einem Gurt 23 befestigten Becher 10 auch bei dem Umlauf des Gurtes 23 mit Bechern 10 über die an Becherwerkskopf und an Becherwerksfuß jeweils angeordneten Trommeln aufrechterhalten bleibt.

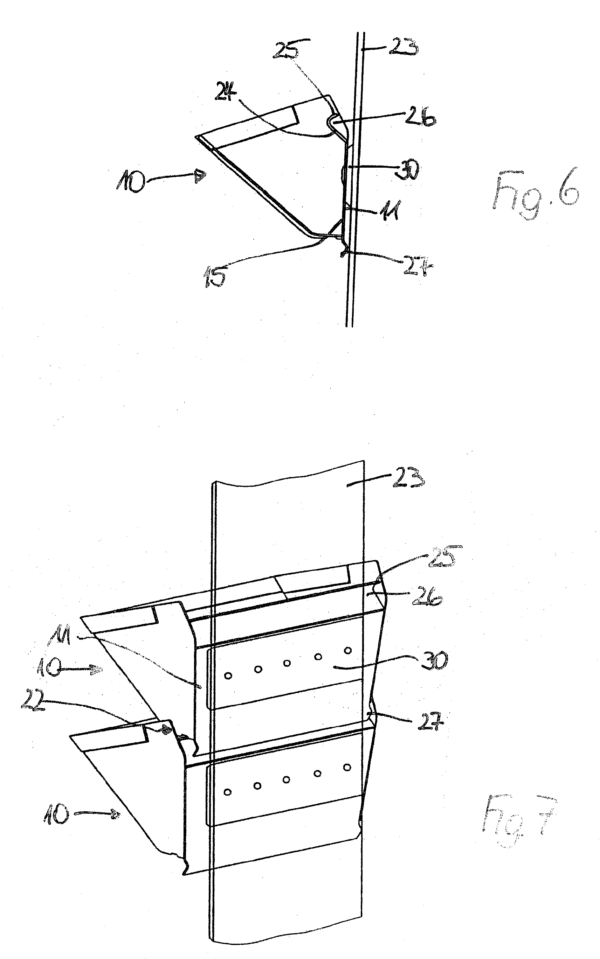

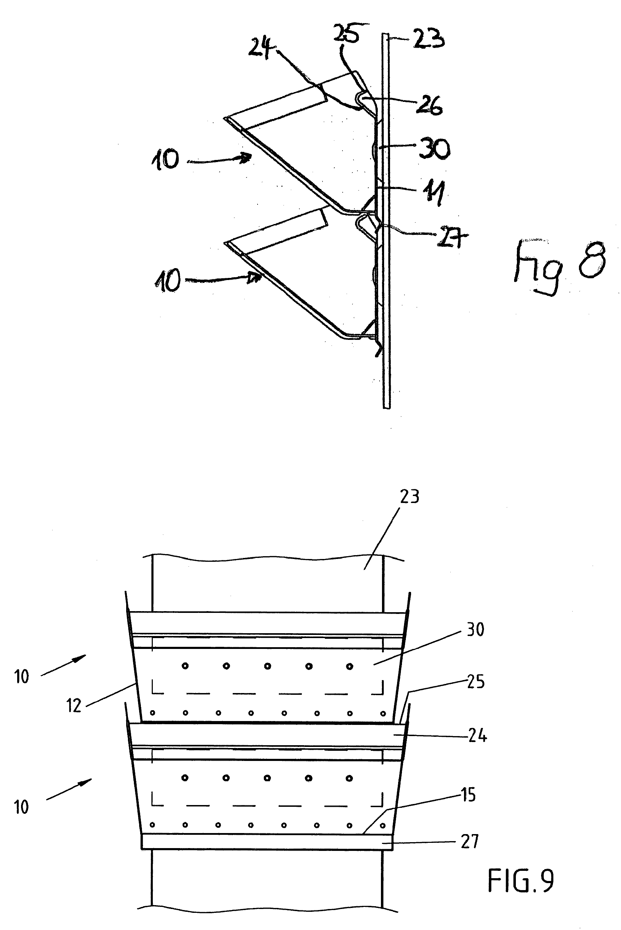

Das in den Figuren 6 bis 10 dargestellte Ausführungsbeispiel unterscheidet sich von dem zuvor beschriebenen Ausführungsbeispiel durch eine unterschiedliche Ausgestaltung des oberen, nach innen abgebogenen Bereichs 24 der Rückwand 11 einerseits und des über den Boden 15 des Bechers 10 vorspringenden Überstandes 16 andererseits. Die beiden vorgenannten Teile sind so ausgebildet und aufeinander abgestimmt, dass die gegenseitige Überlappung der Becher 10 durch einen formschlüssigen Eingriff der betreffenden Bauteile gesichert ist.

Im Einzelnen ist vorgesehen, dass der nach innen abgebogene Bereich 24 der Rückwand 11 sich in einen wiederum nach außen abknickenden hakenförmigen Fortsatz 25 fortsetzt, wodurch unterhalb des Fortsatzes 25 und in dessen rückwärtigen Bereich eine zum Gurt 23 offene Hakenöffnung 26 gebildet ist. Der über den Boden 15 des Bechers 10 vorspringende Überstand 16 des Bechers 10 ist ebenfalls mit einem hakenförmigen Verlauf ausgebildet, wodurch sich ein in die Hakenöffnung 26 des jeweils nachfolgenden Bechers 10 einspringender Haken 27 ergibt. Soweit zur Ausbildung der Hakenform des Überstandes 16 der Überstand 16 leicht über den vertikalen Verlauf der Rückwand 11 übersteht, vermittelt die zwischen der Rückwand 11 und dem Gurt 23 angeordnete Halteplatte 30 den erforderlichen Freiraum.

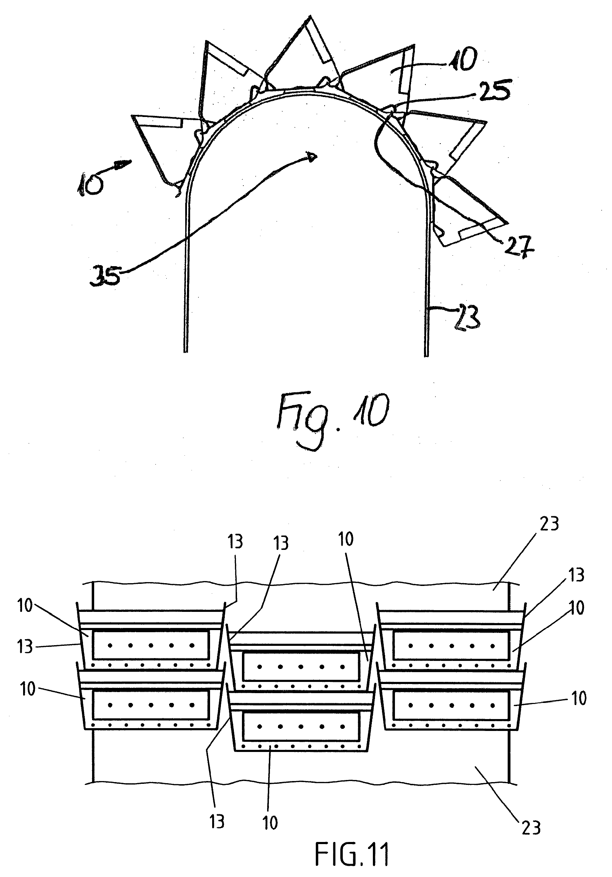

Wie sich dazu aus Figur 10 ergibt, bleibt der formschlüssige Eingriff von Haken 27 in die Hakenöffnung 26 auch während des Umlaufes des Gurtes 23 über eine beispielsweise an einem Becherwerkskopf angeordnete Trommel 35 erhalten, auch soweit sich bei diesem Umlauf die Stellung der einzelnen Becher 10 zueinander ändert.

Soweit gemäß dem in Figur 11 dargestellten Ausführungsbeispiel auf einem Gurt 23 in dessen Verlaufsrichtung nebeneinander drei Reihen von Bechern 10 angeordnet sind, ist jede einzelne Reihe von Bechern 10 in der Weise angeordnet bzw. ausgebildet, wie zuvor zu den Figuren 1 bis 10 beschrieben. Damit die Oberfläche des Gurtes 23 auch bei mehreren Reihen von Bechern 10 vollständig abgedeckt ist, sind die einzelnen Becher 10 von benachbarten Becherreihen jeweils mit einem in der Verlaufsrichtung des Gurtes definierten Versatz zueinander angeordnet derart, dass die oberen Enden der seitlich auswärts ausgestellten Seitenwände 13 der Becher 10 jeweils einander überlappen. Gleichzeitig ist die Anordnung so getroffen, dass die Becher der jeweils außenseitigen Becherreihe mit ihren Seitenwänden 13 über die seitlichen Ränder des Gurtes 23 überstehen, wie dies für eine einzelne Becherreihe beschrieben ist, so dass die äußeren Seitenränder des Gurtes 23 durch die Becheranordnung ebenfalls geschützt sind.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihrer verschiedenen Ausführungsformen wesentlich sein.

## Patentansprüche

1. Gurtbecherwerk mit einem angetriebenen, über an einem Becherwerkskopf und an einem Becherwerksfuß angeordnete Trommeln umlaufenden, endlosen Gurt (23) und mit wenigstens einer sich in der Verlaufsrichtung des Gurtes (23) erstreckenden Reihe von jeweils einzeln an dem Gurt (23) befestigten, einen Boden (15), eine Rückwand (11), Seitenwände (13) sowie eine vordere Becherwand (12) aufweisenden Bechern (10) zur Förderung eines Schüttgutes, wobei die jeweils in wenigstens einer sich in Verlaufsrichtung des Gurtes (23) erstreckenden Reihe in dichter Abfolge zueinander angeordneten Becher (10) an ihrem Boden (15) eine geringere Breite als am oberen Ende ihrer dadurch seitlich auswärts ausgestellten Seitenwände (13) aufweisen, und dass die Becheranordnung auf dem Gurt (23) derart ausgelegt ist, dass der Gurt (23) einschließlich seiner äußeren Seitenränder vollständig von den auf ihm angeordneten Bechern (10) durch Überlappung benachbarter Becher (10) abgedeckt ist, **dadurch gekennzeichnet, dass** die Becher (10) an dem unteren Ende ihrer dem Gurt (23) zugewandten Rückwand (11) einen über den Boden (15) des Bechers (10) in Richtung des in Förderrichtung nachfolgenden Bechers (10) vorspringenden Überstand (16) aufweisen, der bei senkrecht übereinander stehenden Bechern (10) zwischen die dem oberen Rand (17) der Rückwand (11) überragenden Seitenwände (13) des in Förderrichtung nachfolgenden Bechers (10) greift und sich dichtend bis an den oberen Rand (17) der Rückwand (11) des nachfolgenden Bechers (10) heran erstreckt, wobei die Becher (10) in einer auch beim Umlauf über jede der Trommeln aufrechterhaltenen gegenseitigen Überlappung an dem Gurt (23) befestigt sind.

2. Gurtbecherwerk nach Anspruch 1, **dadurch gekennzeichnet, dass** bei Vorhandensein nur einer Reihe von auf dem Gurt (23) angeordneten Bechern (10) die Becher (10) eine größere Breite als die Breite des Gurtes (23) aufweisen und jeweils seitlich über die Seitenränder des Gurtes (23) überstehen.

3. Gurtbecherwerk nach Anspruch 1, **dadurch gekennzeichnet, dass** bei Vorhandensein von mehreren, in der Verlaufsrichtung des Gurtes (23) nebeneinander angeordneten Reihen von Bechern (10) die einzelnen Becher (10) von benachbarten Becherreihen mit einem in der Verlaufsrichtung des Gurtes (23) ausgerichteten Versatz zueinander angeordnet sind derart, dass die oberen Enden der seitlich ausgestellten Seitenwände (13) der Becher (10) jeweils einander überlappen.

4. Gurtbecherwerk nach einem der Ansprüche 1 bis 3, **dadurch gekennzeichnet, dass** die Seitenwände (13) benachbarter Becher (10) in Förderrichtung einander überlappen.

5. Gurtbecherwerk nach einem der Ansprüche 1 bis 4, **dadurch gekennzeichnet, dass** die parallel zum Gurt (23) verlaufende Rückwand (11) des Bechers (10) an ihrem oberem, dem Boden (15) abgewandten Ende einen von der Rückwand (11) in Richtung der Becheröffnung (14) nach innen abgebogenen Bereich (24) aufweist.

6. Gurtbecherwerk nach einem der Ansprüche 1 bis 5, **dadurch gekennzeichnet, dass** zur Befestigung der einzelnen Becher (10) an dem Gurt (23) zwischen der Rückwand (11) des Bechers (10) und dem Gurt (23) eine Halteplatte (30) angeordnet ist.

7. Gurtbecherwerk nach Anspruch 5 oder 6, **dadurch gekennzeichnet, dass** der über den Boden (15) des Bechers (10) vorspringende Überstand (16) des in Förderrichtung vorangehenden Bechers (10) bei senkrecht übereinander stehenden Bechern (10) zwischen den abgebogenen Bereich (24) der Rückwand (11) und den den Becher (10) tragenden Gurt (23) greift.

8. Gurtbecherwerk nach Anspruch 5 oder 6, **dadurch gekennzeichnet, dass** der nach innen abgebogene Bereich (24) der Rückwand (11) sich in einen wiederum nach außen abknickenden hakenförmigen Fortsatz (25) mit einer dadurch im rückwärtigen Bereich ausgebildeten Hakenöffnung (26) fortsetzt und der über den Boden (15) des Bechers (10) vorspringende Überstand (16) des in Förderrichtung vorangehenden Bechers (10) hakenförmig mit einem in die Hakenöffnung (26) des nachfolgenden Bechers (10) einspringenden Haken (27) ausgebildet ist.

9. Gurtbecherwerk nach einem der Ansprüche 1 bis 8, **dadurch gekennzeichnet, dass** die Seitenwände (13) des Bechers (10) an ihrem oberen Ende eine jeweils dreieckförmige Kontur aufweisen, deren Spitze (21) oberhalb des Endes des abgebogenen Bereichs (24) der Rückwand (11) gelegen ist.

10. Gurtbecherwerk nach einem der Ansprüche 1 bis 9, **dadurch gekennzeichnet, dass** der obere Rand (17) der Rückwand (11) des Bechers (10) mit einem innenseitig daran angesetzten Verstärkungsprofil (18) versehen ist.

11. Gurtbecherwerk nach einem der Ansprüche 1 bis 10, **dadurch gekennzeichnet, dass** im Inneren des Bechers (10) im Stoßbereich von Boden (15) und Rückwand (11) ein Verstärkungswinkel (19) angebracht ist.

## Claims

1. Belt bucket elevator for conveying bulk material, comprising a driven endless belt (23), which is circulated via drums arranged on a bucket elevator head and on a bucket elevator base, and comprising at least one row of buckets (10), each of which is individually fixed to the belt (23) and has a base (15), a back wall (11), lateral walls (13), and a front wall (12), said row extending in the running direction of the belt (23), wherein each of the buckets (10), which are arranged in close succession relative to one another, in at least one row extending in the running direction of the belt (23) has a smaller width at the base (15) than at the upper ends of the lateral walls (13), which thus extend outwards laterally and wherein the arrangement of the buckets on the belt (23) is designed such that the belt (23) including the outer lateral edges of the belt, is completely covered by overlapping of adjacent buckets (10) arranged thereon, **characterized in that** the buckets (10) have an overhang (16) on the lower ends of the back wall (11) facing the belt (23) that extends over the base (15) of the bucket (10) in the direction of the successive bucket (10) in the running direction, which, with buckets arranged perpendicularly on top of one another, engages between the lateral walls (13) that project over the upper edge (17) of the back wail (11) of the successive bucket in the running direction and extends sealingly to the upper edge (17) of the back wall (11) of the successive bucket (10), wherein the buckets (10) are attached to the belt (23) in a sustained, mutual overlapping also upon circulation via each of the drums.

2. Bet bucket elevator according to claim 1, **characterized in that** with provision of only one row of buckets (10) arranged on the belt (23), the buckets (10) have a greater width than the width of the belt (23) and extends, respectively, laterally over the lateral edges of the belt (23).

3. Belt bucket elevator according to claim 1, **characterized in that** with provision of multiple rows of buckets (10) arranged adjacently in the running direction of the belt (23), the individual buckets (10) of adjacent bucket rows are arranged relative to one another with an offset oriented in the running direction of the belt (23), such that the upper ends of the lateral walls (13) of the buckets (13), respectively, overlap one another.

4. Belt bucket elevator according to one of claims 1 through 3, **characterized in that** the lateral walls (13) of adjacent buckets (10) overlap one another in the running direction.

5. Belt bucket elevator according to one of claims 1 through 4, **characterized in that** the bucket's (10) back wall (11) running parallel to the belt (23) has a region (24) bent inwardly from the back wall (11) in the direction of the bucket opening (14) at its upper edge facing away from the base (15).

6. Belt bucket elevator according to one of claims 1 through 5, **characterized in that** for attachment of the individual buckets (10) to the belt (23), a fastening plate (30) is arranged between the back wall (11) of the bucket (10) and the belt (23).

7. Belt bucket elevator according to claim 5 or 6, **characterized in that** the overhang (16) projecting over the base (15) of the bucket (10) of the preceding bucket (10) in the conveying direction, with buckets disposed perpendicularly on top of one another, engages between the bent region (24) of the back wall (11) and the belt (23) currying the buckets (10).

8. Belt bucket elevator according to claim 5 or 6, **characterized in that** the inwardly bent region (24) of the back wall (11) continues in turn to a outwardly bent, hook-shaped projection (25) with a hook opening (26) formed thereby in a rearward region and the overhang (16) projecting over the base (15) of the bucket (10) of the preceding bucket (10) in the conveying direction is formed in a hook-shape with a hook (27) engaging in the hook opening (26) of the successive bucket (10).

9. Belt bucket elevator according to one of claims 1 through 8, **characterized in that** the lateral walls (13) of the bucket (10) have a respective triangular contour on their upper ends, whose tip (21) is positioned above the end of the bent region (24) of the back wall (11).

10. Belt bucket elevator according to one of claims 1 through 9, **characterized in that** the upper edge (17) of the back wall (11) of the bucket (10) is provided with an internal reinforcement profile (18).

11. Belt bucket elevator according to one of claims 1 through 10, **characterized in that** in the interior of the bucket (10), in the joint area of the base (15) and back wall (11), a reinforcement angle (19) is provided.

## Revendications

1. Elévateur à godets entraîné par ruban avec un ruban (23) sans fin tournant autour de tambours disposés sur une tête d'élévateur à godets et un pied d'élévateur à godets et avec au moins une série de godets (10) fixés sur le ruban (23), s'étendant respectivement individuellement dans le sens de la marche du ruban (23), comportant un fond (15), une paroi arrière (11), des parois latérales (13) ainsi qu'une paroi de godet avant (12), pour le transport d'un matériau en vrac, pour lequel les godets (10) disposés en suite serrée l'un par rapport à l'autre respectivement en au moins une série s'étendant dans le sens de la marche du ruban (23) comportent sur leur fond (15) une largeur plus faible qu'à l'extrémité supérieure de leurs parois latérales (13) exposées latéralement de ce fait vers l'extérieur et que la disposition des godets sur le ruban (23) est conçue de telle manière que le ruban (23), ses bords latéraux extérieurs inclus, est recouvert complètement par les godets (10) disposés sur lui par chevauchement des godets (10) voisins, **caractérisé en ce que** les godets (10) comportent sur l'extrémité inférieure de leur paroi arrière (11) tournée vers le ruban (23), une projection (16) faisant saillie sur le fond (15) du godet (10) dans la direction du godet (10) suivant dans le sens du transport, qui, avec les godets (10) étant verticalement superposés, vient en prise entre les parois latérales (13) dépassant du bord supérieur (17) de la paroi arrière (11) du godet (10) suivant dans le sens du transport, et s'étend de manière compacte jusqu'au bord supérieur (17) de la paroi arrière (11) du godet (10) suivant, pour lequel les godets (10) sont fixés sur le ruban (23) dans un chevauchement réciproque maintenu également lors du passage autour de chacun des tambours.

2. Elévateur à godets entraîné par ruban selon la revendication 1 **caractérisé en ce qu'**en présence seulement d'une série de godets (10) disposés sur le ruban (23), les godets (10) comportent une largeur plus grande que la largeur du ruban (23) et surmontent respectivement latéralement les bords latéraux du ruban (23).

3. Elévateur à godets entraîné par ruban selon la revendication 1 **caractérisé en ce qu'**en présence de plusieurs séries de godets (10) disposées l'une à côté de l'autre dans le sens de la marche du ruban (23), les godets (10) individuels des séries de godets voisines sont disposés entre eux avec un départ orienté dans le sens du passage du ruban (23) de telle manière que les extrémités supérieures des parois latérales (13) exposées latéralement des godets (10) se chevauchent respectivement entre elles.

4. Elévateur à godets entraîné par ruban selon l'une quelconque des revendications 1 à 3 **caractérisé en ce que** les parois latérales (13) des godets voisins (10) se chevauchent entre elles dans le sens du transport.

5. Elévateur à godets entraîné par ruban selon l'une quelconque des revendications 1 à 4 **caractérisé en ce que** la paroi arrière (11) du godet (10) passant parallèlement au ruban (23) comporte sur son extrémité supérieure orientée à l'opposé du fond (15) une zone (24) incurvée de la paroi arrière (11) vers l'intérieur en direction de l'ouverture de godet (14).

6. Elévateur à godets entraîné par ruban selon l'une quelconque des revendications 1 à 5 **caractérisé en ce que** pour la fixation des godets (10) individuels sur le ruban (23), une plaque de fixation (30) est disposée entre la paroi arrière (11) du godet (10) et le ruban (23).

7. Elévateur à godets entraîné par ruban selon la revendication 5 ou 6 **caractérisé en ce que** la projection (16) du godet (10) précédant dans le sens du transport, faisant saillie au-dessus du fond (15) du godet (10), vient en prise entre la zone repliée (24) de la paroi arrière (11) et le ruban (23) portant le godet (10), les godets (10) étant verticalement superposés.

8. Elévateur à godets entraîné par ruban selon la revendication 5 ou 6 **caractérisé en ce que** la zone pliée vers l'intérieur (24) de la paroi arrière (11) se poursuit dans un prolongement (25) en forme de crochet replié à nouveau vers l'extérieur avec une ouverture de crochet (26) formée ainsi dans la zone en arrière et la projection (16) du godet (10) précédant dans le sens du transport, faisant saillie au-dessus du fond (15) du godet (10), est constituée en forme de crochet avec un crochet (27) s'enclenchant par ressort dans l'ouverture de crochet (26) du godet suivant (10).

9. Elévateur à godets entraîné par ruban selon l'une quelconque des revendications 1 à 8 **caractérisé en ce que** les parois latérales (13) du godet (10) comportent respectivement à leur extrémité supérieure un contour de forme triangulaire dont la pointe (21) est posée au-dessus de l'extrémité de la zone repliée (24) de la paroi arrière (11).

10. Elévateur à godets entraîné par ruban selon l'une quelconque des revendications 1 à 9 **caractérisé en ce que** le bord supérieur (17) de la paroi arrière (11) du godet (10) est muni d'un profilé de renfort (18) appliqué à celui-ci côté intérieur.

11. Elévateur à godets entraîné par ruban selon l'une quelconque des revendications 1 à 10 **caractérisé en ce qu'**à l'intérieur du godet (10) une cornière de renfort (19) est montée dans à zone d'impact du fond (15) et de la paroi arrière (11).
